# FASCICULE DE BREVET EUROPEEN

(11) **EP 0 927 677 B1**
(45) Date de publication et mention de la délivrance du brevet: **05.03.2003**
(21) Numéro de dépôt: 98403203.7
(22) Date de dépôt: 18.12.1998
(51) Int. Cl.: B62D 6/00, G05D 1/03

(54) **Système de commande d'une direction intelligente de véhicule automobile**
Regelsystem für eine intelligente Lenkung eines Kraftfahrzeugs
Control system for an intelligent steering system for a motor vehicle

(30) Priorité: 31.12.1997 FR 9716782
(43) Date de publication de la demande: 07.07.1999
(73) Titulaire: Renault s.a.s., 92100 Boulogne Billancourt (FR)
(72) Inventeur: Bonnay, Frédéric, 80000 Amiens (FR); Coffin, Florent, 27600 Gaillon (FR); Ladreyt, Thierry, 38540 Grenay (FR); Zalila, Zyed, 60200 Compiegne (FR)

(56) Documents cités:
- EP-A- 0 806 336
- DE-A- 4 419 317
- US-A- 5 208 750

## Description

La présente invention concerne un système de commande de la direction intelligente d'un véhicule automobile, destiné à alléger la tâche du conducteur dans le contrôle transversal de son véhicule et à assurer, dans certaines conditions, une fonction de guidage automatique en calant la trajectoire du véhicule sur un rail virtuel.

La conception des systèmes d'aide à la conduite actuels tient compte de deux objectifs, la tenue de cap du véhicule et la vigilance du conducteur. Certaines solutions ont pour objectif d'améliorer le confort, en stabilisant le cap par exemple, tout en excluant une conduite automatique du véhicule. D'autres solutions ont pour objectif d'éviter une perte de contrôle du véhicule et de prévenir le conducteur du caractère anormal de sa trajectoire au moyen d'une alarme sonore et éventuellement d'une action automatique sur la direction. Cette priorité à la sécurité ne tient généralement pas compte des actions volontaires du conducteur.

Dans la demande de brevet français publiée sous le numéro FR 2 679 537, au nom de MATRA SEP IMAGERIE ET INFORMATIQUE, le dispositif décrit concerne un procédé de repérage et de suivi de la position d'un véhicule sur la route, mis en oeuvre par un dispositif embarqué, qui comprend notamment une caméra fournissant une image de la route, un calculateur ayant des moyens de traitement de l'image permettant d'identifier la position du véhicule, et des moyens d'affichage ou d'alarme. Dans un premier mode de réalisation, le système prévient le conducteur de l'imminence d'un danger, tel une sortie de voie, en générant éventuellement des signaux d'alarme visuels, sonores ou kinesthésiques. Et dans un autre mode de réalisation, le système assure un contrôle temporaire de la direction, au moyen d'actionneurs, maintenant le véhicule au milieu de sa voie de roulement et évitant au conducteur la fatigue de la résistance à un vent latéral. Le système peut de plus comporter un module détectant l'hypovigilance du conducteur, dans un but de sécurité.

Dans la demande de brevet allemand DE 19 507 957 C1, déposée au nom de DAIMLER-BENZ, le système décrit utilise la technologie des capteurs infrarouges connectés à deux matrices CCD de part et d'autre du véhicule, pour identifier des informations telles que la position et la vitesse latérales, l'orientation du véhicule par rapport aux lignes délimitant la route, permettant à un calculateur électronique de proposer des fonctions de vigilance, de maintien dans la voie et de surveillance de l'environnement. Il peut émettre notamment un signal acoustique lorsqu'il détecte l'imminence d'une sortie de voie. Le conducteur peut activer ou désactiver une fonction automatique de maintien dans la voie.

Ainsi, dans ces deux cas, soit le conducteur reste maître de son véhicule en toute circonstance et le système offre des prestations de confort sans jamais contrôler la trajectoire, soit le système offre un contrôle automatique de la conduite en excluant le conducteur des boucles de régulation.

Le but de l'invention est de concevoir un système d'assistance active, capable d'assurer une gestion automatique de la trajectoire du véhicule, qui soit auto-adaptatif et transparent pour le conducteur du véhicule, tout en intégrant celui-ci dans la boucle de régulation pour lui permettre de reprendre le contrôle de la direction à tout moment, s'il le désire. Ce système qualifié de copilote électronique intelligent cale le véhicule sur une trajectoire stable, non oscillante et confortable selon les critères propres à l'automobiliste.

Pour cela, l'objet de l'invention est un système de commande de la direction d'un véhicule automobile constitué d'un dispositif de localisation délivrant des données relatives à l'environnement, d'un calculateur électronique embarqué délivrant une consigne destinée à des actionneurs en vue d'atteindre le positionnement optimal du véhicule dans la voie sur laquelle il circule, et recevant par ailleurs des données sur le fonctionnement du véhicule et des données relatives au conducteur, caractérisé en ce que le calculateur comporte quatre modules électroniques et un superviseur:
- un premier module de diagnostic du style de conduite et des actions volontaires du conducteur, portant sur leur existence et sur leur type, et recevant en entrée des données Dᵥ sur le fonctionnement du véhicule, des données D_{c} sur le conducteur et la consigne issue du superviseur;
- un second module de modélisation du comportement d'un conducteur, délivrant une trajectoire de référence du véhicule, en fonction des données Dₑ relatives à l'environnement, des données Dᵥ relatives au fonctionnement du véhicule, des données D_{c} relatives au conducteur et des données D_{d} issues du module de diagnostic des actions du conducteur ;
- un troisième module de contrôle de la trajectoire du véhicule qu'il asservit à une trajectoire de référence dans la voie de circulation et lors d'un changement de voie, défini par le module de modélisation du comportement d'un conducteur, en fonction des données Dₑ relatives à l'environnement, des données Dᵥ relatives au véhicule et des données D_{c} relatives au conducteur ;
- un quatrième module de diagnostic de l'environnement de l'ensemble constitué par le véhicule et son conducteur, délivrant des informations sur la présence d'obstacles statiques ou mobiles devant le conducteur, dans sa voie de circulation, et des informations sur la présence et les caractéristiques de roulage de véhicules dans les voies adjacentes, en fonction de signaux provenant de moyens de détection et de mesure d'obstacles, d'images vidéo et de messages hertziens ;
- un module de supervision flou, recevant et assurant l'échange des informations nécessaires aux différents modules, analysant le risque et garantissant la sûreté et la cohérence globale de la stratégie qu'il choisit.

D'autres caractéristiques et avantages de l'invention apparaîtront à la lecture de la description d'un exemple de réalisation illustrée par les figures suivantes qui sont :
- la figure 1 : un exemple d'architecture fonctionnelle d'un système de commande de la direction intelligente selon l'invention ;
- la figure 2 : un schéma fonctionnel d'un système de commande de la direction intelligente selon l'invention
- la figure 3 : un schéma fonctionnel d'un contrôleur flou de trajectoire, dans un système de commande selon l'invention ;
- les figures 4 à 8 : des exemples de qualifications linguistiques de variables d'entrée floues et du couple de sortie ;
- les figures 9 à 11 : des exemples de nappes de contrôle spécialisées pour des configurations particulières de route.

Dans un système de commande de la direction dite intelligente selon l'invention, la gestion de la trajectoire du véhicule est réalisée par un calculateur électronique embarqué, pour répondre au mieux aux attentes du conducteur et l'assister dans sa conduite.

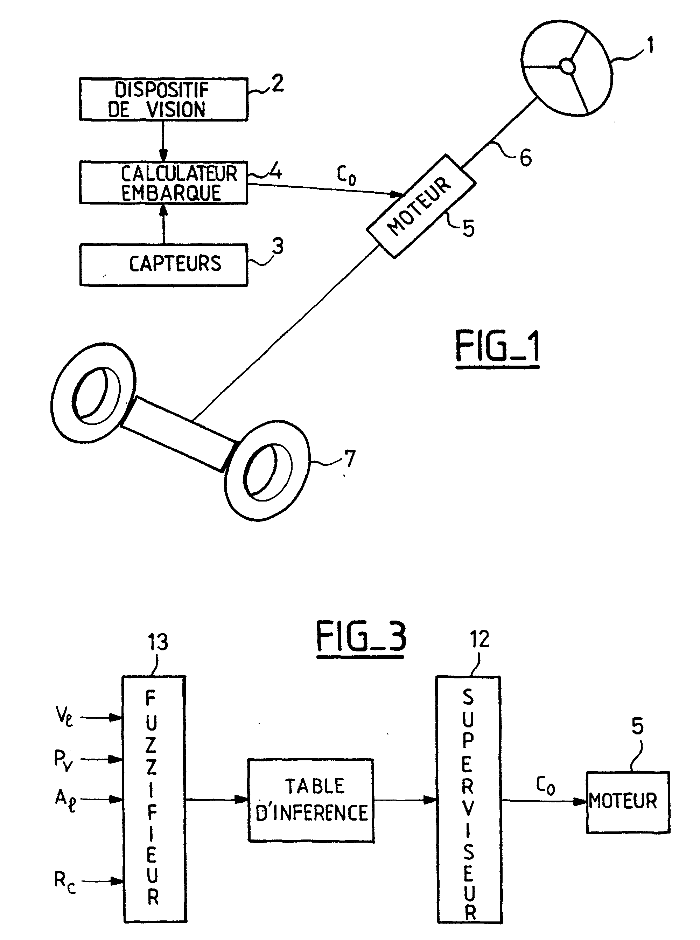

Selon l'exemple d'architecture fonctionnelle de la figure 1, le système de commande de la direction d'un véhicule automobile, calculant une consigne destinée à des actionneurs en vue d'atteindre le positionnement optimal du véhicule dans sa voie de fonctionnement, comprend tout d'abord un dispositif de localisation fournissant des données relatives à l'environnement Dₑ et au conducteur D_{c}.
Ce dispositif de localisation 2 peut être par exemple un dispositif de vision qui filme la route, tel une caméra, associé à un dispositif de traitement de l'image filmée.
Ce peut être aussi des magnétomètres qui captent le champ magnétique issu de sources magnétiques parfaitement localisées dans la chaussée, ou bien un dispositif de repérage par GPS (Global Positioning System) associé à une cartographie numérique, ou bien encore la combinaison de ces trois technologies avec fusion des données.

Ces données, ainsi que certains paramètres liés au véhicule, comme la vitesse longitudinale, l'angle du volant, l'état des clignotants ..., délivrés par des capteurs 3, sont pris en compte par un calculateur électronique embarqué 4, destiné à délivrer une consigne C₀ à un dispositif actionneur positionnant le véhicule de manière optimale dans sa voie. Un tel dispositif peut être :
- soit un moteur électrique 5, coaxial à la colonne de direction 6 reliant le volant aux roues 7 et ayant une consigne de couple volant ou d'angle volant;
- soit un moteur électrique utilisé pour une direction assistée électrique auquel on superposerait la consigne de couple de la direction intelligente à la consigne initiale émanant des données du véhicule et du conducteur;
- soit un vérin piloté par un groupe électropompe qui déplacerait le boîtier de crémaillère de la direction.
- soit un dispositif de pilotage de la force de freinage indépendante sur chaque roue pour générer un moment de lacet.

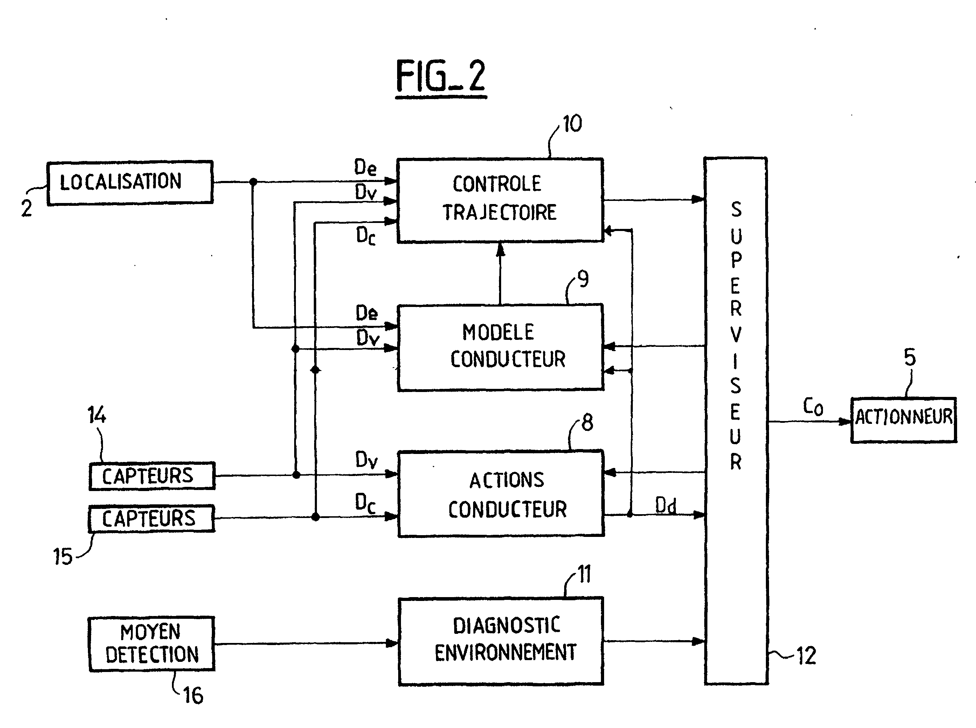

Le système de commande de la direction intelligente comprend donc de plus un calculateur électronique embarqué 4, qui comporte, comme le montre le schéma fonctionnel d'un exemple de réalisation, sur la figure 2, quatre modules électroniques 8 à 11 et un superviseur flou 12, recevant en entrée trois types d'informations :
- des données Dₑ relatives à l'environnement, comme la position du véhicule dans la voie, le rayon de courbure instantané et anticipé de la voie, la longueur de développement du virage, la distance qui sépare le véhicule du début du prochain virage, ou une information symbolique permettant de qualifier le virage, l'angle de lacet que fait l'axe longitudinal du véhicule avec l'axe de la voie, la présence, la nature et la vitesse relative d'obstacles mobiles et/ou statiques dans la voie ou les voies adjacentes, ces données étant délivrées par des moyens de localisation 2 ;
- des données Dᵥ relatives au véhicule, comme sa vitesse et son accélération transversales et longitudinales, la vitesse de lacet, qui sont délivrées par des premiers capteurs 14 ;
- des données D_{c} relatives au conducteur, comme le couple qu'il applique sur le volant, l'angle et la vitesse de rotation du volant, l'effort appliqué sur la pédale de frein, et l'angle d'ouverture du papillon, qui sont délivrées par des seconds capteurs 15.

Le premier module 8, diagnostiquant le style de conduite et les actions du conducteur, détecte les raisons pour lesquelles le conducteur entreprend une action et qui sont notamment:
- le repositionnement du véhicule dans la voie de circulation ;
- le dépassement ou le rabattement d'un autre véhicule circulant sur la même voie ;
- l'évitement d'un obstacle statique ou mobile, réalisant par exemple une manoeuvre d'urgence;
- le changement de voie;
- une action destinée à contrer une perturbation transversale, telle qu'un dévers, un vent latéral ou des ornières par exemple.

Ce module 8 délivre en sortie des informations D_{d} de diagnostic portant sur l'existence ou non d'une action du conducteur d'une part, et si oui, sur le type d'action entrepris d'autre part.

Pour cela, il reçoit en entrée trois types de données :
- des données Dᵥ relatives au véhicule, telles que sa vitesse, son accélération transversale ;
- des données D_{c} relatives au conducteur, telles que l'angle du volant, la vitesse de rotation du volant, l'état de fonctionnement des clignotants, le couple appliqué par le conducteur sur le volant, l'effort appliqué sur la pédale du frein, l'angle d'ouverture du papillon ;
- la consigne délivrée par le superviseur flou 12, destinée aux actionneurs en vue d'atteindre le positionnement optimal.

Un second module 9 modélise le comportement d'un conducteur automobile prototype d'une classe de conducteur identifiée, en s'appuyant sur les règles heuristiques floues de conduite, issues de la verbalisation des conducteurs, selon l'approche de la psychologie cognitive. Ce modèle du conducteur délivre en sortie une consigne de positionnement optimal du véhicule dans la voie, définissant à chaque instant une trajectoire désirée, dite de référence.

Pour cela, il reçoit en entrée trois types de données ;
- des données Dₑ relatives à l'environnement, telles que le rayon de courbure instantané et anticipé ou une information symbolique qualifiant le virage;
- des données Dᵥ relatives au véhicule, telles que sa vitesse et son accélération transversales et longitudinales ;
- des données D_{d} issues du module 8 de diagnostic des actions du conducteur.

Un troisième module 10 est un contrôleur flou de trajectoire, qui asservit la trajectoire du véhicule sur un rail virtuel défini comme trajectoire de référence par le modèle de conducteur 9, de sorte que la trajectoire réelle est stable et confortable pour le conducteur.

Ce contrôleur flou de trajectoire 10 délivre une consigne, correspondant à une action à appliquer sur l'organe de direction et/ou sur les freins pour modifier la trajectoire. Pour cela, il reçoit en entrée quatre types de données :
- des données Dₑ relatives à l'environnement, telles que le rayon de courbure instantané et anticipé de la route, la position dans la voie et l'angle de lacet ;
- des données Dᵥ relatives au véhicule, telles que la vitesse latérale du véhicule ;
- des données D_{c} relatives au conducteur, telles que la position souhaitée du véhicule dans la voie, délivrée par le modèle de conducteur 9;
- des données D_{d} issues du module 8 de diagnostic des actions du conducteur.

Ainsi, d'une part, ce contrôleur flou de trajectoire 10 est auto-adaptatif à l'environnement, car le module 9 modélisant le comportement du conducteur choisit sa trajectoire en fonction des données issues de l'environnement Dₑ, et d'autre part au conducteur lui-même, puisque ses actions sont prises en compte.

Le système de commande de la direction intelligente, objet de l'invention, comprend un quatrième module 11 de diagnostic de l'environnement de l'ensemble constitué par le véhicule et son conducteur, qui détecte tout d'abord la présence d'obstacles statiques ou mobiles dans la voie, devant le véhicule, comme des objets, des piétons, des cyclistes ou véhicules lents, et aussi la présence de véhicules dans les voies adjacentes dans les deux sens de circulation devant et derrière le véhicule, la vitesse relative longitudinale et transversale, ainsi que leur distance relative par rapport au véhicule.

Pour délivrer en sortie ces deux types d'informations, il reçoit en entrée des signaux provenant de moyens de détection 16 et de mesure tels qu'un radar ou un laser, des images vidéo et des communications hertziennes entre véhicules ou entre véhicules et infrastructure.

Ce module 11 de diagnostic de l'environnement informe le superviseur 12 de la présence d'un danger potentiel ou d'un événement pouvant rendre dangereuse une manoeuvre, tel qu'un dépassement de véhicule, un changement de voie ou le maintien du véhicule dans sa voie, et déclenche, au niveau du superviseur, les stratégies adéquates. Ces stratégies prennent plusieurs formes, allant de la simple information au conducteur jusqu'à la prise de contrôle en durcissant la direction, par exemple pour empêcher une manoeuvre erratique ou dangereuse du conducteur, pour éviter un obstacle ou pour changer de voie automatiquement selon le diagnostic.

Cette caractéristique du système de commande selon l'invention résidant dans son auto-adaptativité à l'environnement et au conducteur est particulièrement intéressante. A tout moment, le système s'inhibe progressivement dès qu'il détecte une action de reprise en main volontaire émanant du conducteur. Par exemple, lors d'une détection d'une action du conducteur voulant changer de voie, le système doit annuler graduellement son action et enclencher automatiquement le clignotant gauche en vue d'avertir les autres véhicules du changement de voie. Le système pourra aussi proposer une trajectoire permettant un changement de voie automatique.
De même, si le système détecte que le conducteur le contre en vue de recaler sa position de croisière ailleurs qu'au milieu de la voie, le système recalcule une nouvelle position du rail virtuel dans la voie. La trajectoire proposée par le système se réfère à un modèle de comportement du conducteur paramétrable et adaptatif grâce aux capacités d'apprentissage et de classification automatique des réseaux neuro-mimétiques ou neuroflous.

Cette auto-adaptativité se fait aussi par rapport à l'environnement. Ainsi, en ligne droite, le choix de la position du rail est laissé au conducteur sauf s'il choisit de fixer ce rail dans une zone dangereuse, par exemple en chevauchant une limite de sortie de voie. Le système doit l'en avertir et inhiber le guidage automatique. Par contre, en virage, le système propose une trajectoire optimale issue du modèle de comportement du conducteur pour le suivi de trajectoire en courbe, en fonction des caractéristiques du virage telles que le rayon de courbure et de la vitesse du véhicule, afin de contrer les effets de la force centrifuge.

Le module de supervision 12 reçoit et assure l'échange des informations nécessaires aux différents modules, et garantit la sûreté et la cohérence globale de la stratégie qu'il choisit, par exemple l'autorisation ou l'interdiction d'un changement de voie ou d'un dépassement.

Ces cinq modules 8 à 12 constituent chacun un système à base de règles floues de manière à permettre une bonne intelligibilité du système et à inclure, grâce aux propriétés intrinsèques de l'approche linguistique, le comportement et les choix du conducteur dans la boucle de régulation que ce soit au niveau de la prise de décision, stratégique et tactique, ou au niveau du contrôle opérationnel.

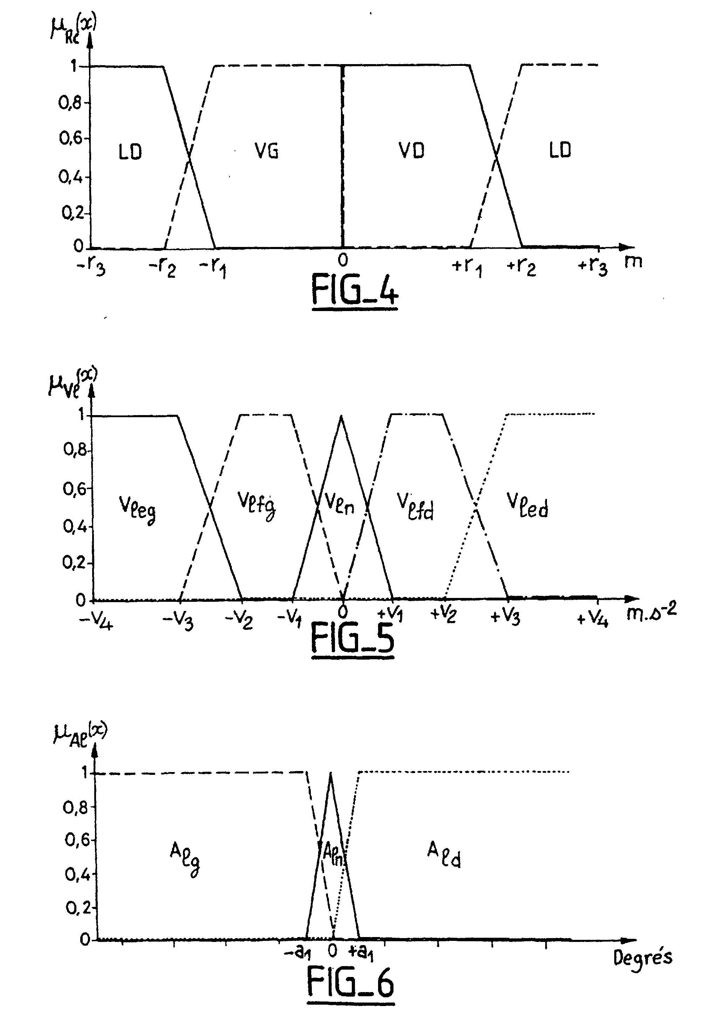

Selon une caractéristique essentielle de l'invention, le module 10 contrôleur de la trajectoire est réalisé, comme le montre le schéma fonctionnel de la figure 3, à partir d'un contrôleur flou, dont les quatre variables floues d'entrée sont le rayon de courbure R_{c} de la route, la vitesse latérale Vₗ du véhicule, la position du véhicule Pᵥ dans la voie de circulation et l'angle de lacet Aₗ que fait l'axe longitudinal du véhicule avec l'axe de circulation de la route.

L'univers du discours est défini par les valeurs suivantes :
- le rayon de courbure R_{c} de la route est mesuré dans un intervalle compris entre deux valeurs extrêmes, par exemple - 2000 mètres et + 2000 mètres, de sorte que la route est considérée en ligne droite, en virage à gauche et en virage à droite pour des valeurs linguistiques modélisées par des intervalles flous trapézoïdaux ;
- la position Pᵥ du véhicule dans la voie est déterminée dans un intervalle compris entre deux valeurs opposées - Lᵥ et + Lᵥ, en mètres, où Lᵥ désigne la largeur de la voie, telle qu'elle est détectée par le système de localisation;
- la vitesse latérale Vₗ varie dans l'intervalle compris entre - 1m/s et + 1m/s par exemple ;
- l'angle de lacet varie dans l'intervalle compris entre deux valeurs maximales - a₂ et + a₂, par exemple - 90 degrés et + 90 degrés.

De plus, une fonction a été développée afin de redéfinir en temps réel les valeurs floues que peut prendre la position du véhicule dans la voie de circulation, permettant un asservissement sur une consigne dynamique et un suivi de la trajectoire de référence.

Comme le montre la figure 3, représentant le schéma fonctionnel du module contrôleur de trajectoire, ces quatre variables d'entrée sont traitées par un fuzzifieur 13 qui, dans une première phase, calcule le degré d'appartenance de la variable floue, constituée par le rayon de courbure R_{c}, à chacune des classes floues caractéristiques de la forme de la route, et qui sont qualifiées de : LIGNE DROITE (LD), VIRAGE A GAUCHE (VG) et VIRAGE A DROITE (VD). Ces trois classes floues sont par exemple choisies de forme trapézoïdale, comme le montre la figure 4 qui est la qualification linguistique du rayon de courbure R_{c}, c'est-à-dire de la situation dans laquelle se trouve le véhicule. Ces trois classes floues sont dénommées :
- VG : virage à gauche défini par un intervalle flou trapézoïdal [- r₂ ;- r₁ ; 0 ; 0] ;
- VD : virage à droite défini par l'intervalle flou trapézoïdal [0 ; 0 ; + r₁ ; + r₂] ;
- LD : ligne droite défini par l'union d'intervalles flous trapézoïdaux : [-r₃ ; - r₃ ; - r₂ ; - r₁] U [+r₁ ; +r₂ ; +r₃ ; +r₃];

Puis, le fuzzifieur calcule le degré d'appartenance µ(x) des trois autres variables floues d'entrée à chacune de leurs classes floues.

La figure 5 est la qualification linguistique de la vitesse latérale Vₗ du véhicule. Elle définit une partition floue à cinq classes. Ces cinq classes sont dénommées :
- V_{leg} : vitesse latérale élevée vers la gauche, définie par l'intervalle flou trapézoïdal [- v4 ; - v4 ; - v3 ; - v2] m.s² ;
- V_{lfg} : vitesse latérale faible vers la gauche, définie par l'intervalle flou trapézoïdal [- v3 ; - v2 ; - v1 ; 0] m.s² ;
- Vₗₙ : vitesse latérale nulle, définie par le nombre flou triangulaire [- v1 ; 0 ; + v1] m.s² ;
- V_{lfd} : vitesse latérale faible vers la droite, définie par l'intervalle flou trapézoïdal [0 ; + v1 ; + v2 ; + v3] m.s² ;
- V_{led} : vitesse latérale élevée vers la droite, définie par l'intervalle flou trapézoïdal [+ v2 ; + v3 ; + v4 ; + v4] m.s².

La figure 6 est la qualification linguistique de l'angle de lacet Aₗ du véhicule, qui définit une partition floue à trois classes floues. Ces trois classes sont dénommées de la façon suivante :
- A_{lg} : angle de lacet dirigé vers la gauche, défini par l'intervalle flou trapézoïdal [- a2 ; - a1 ; 0 ; 0] degrés ;
- Aₗₙ : angle de lacet nul, défini par le nombre flou triangulaire [- a1 ; 0 ; + a1] degrés ;
- A_{ld} : angle de lacet dirigé vers la droite, défini par l'intervalle flou trapézoïdal [0 ; + a1 ; + a2] degrés.

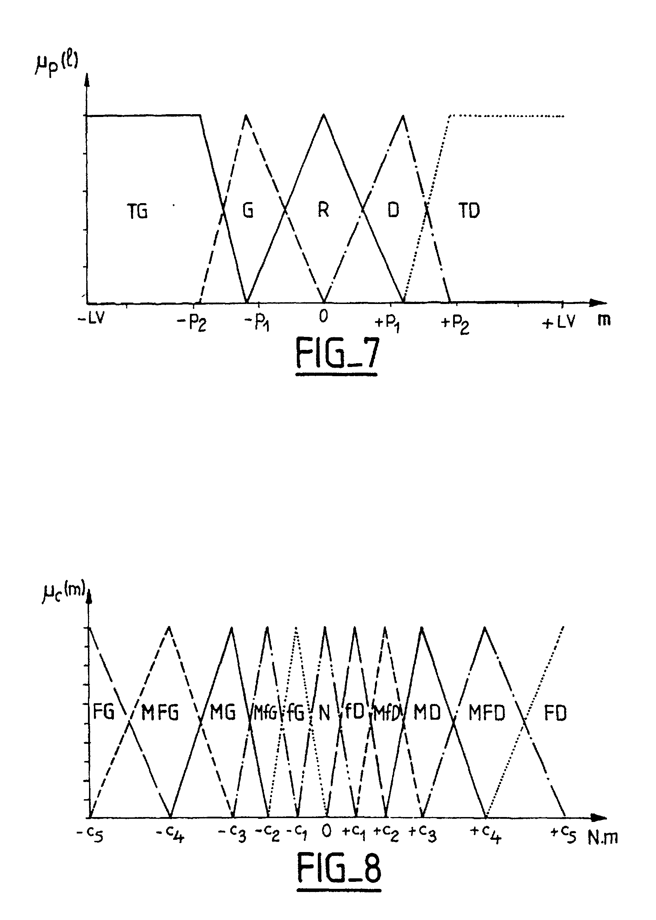

La figure 7 est la qualification linguistique de la position du véhicule Pᵥ dans la voie de circulation, qui définit une partition floue à cinq classes floues. Ces cinq classes sont dénommées de la façon suivante :
- TG : très à gauche du milieu de la voie, définie par l'intervalle flou trapézoïdal [- LV ; - LV ; - p2 ; - p1] mètres ;
- G : à gauche, définie par le nombre flou triangulaire [- p2 ; - p1 ; 0] mètres ;
- R : le long du rail, au milieu de la voie, définie par le nombre flou triangulaire [- p1 ; 0 ; + p1] mètres ;
- D : à droite du milieu de la voie, définie par le nombre flou triangulaire [0 ; + p1 ; + p2] mètres ;
- TD: très à droite, définie par l'intervalle flou trapézoïdal [+ p1 ; + p2 ; + LV ; + LV] mètres.

Dans un tel cas de système complexe, composé du conducteur, de son véhicule et de l'environnement, où l'environnement inclut le système routier, son infrastructure et ses autres usagers, tels que des véhicules et des piétons entre autres, la commande est construite, selon l'invention, à partir de l'expertise du conducteur humain en mettant à contribution son expérience et son vécu. Avec cette approche floue de nature heuristique, le savoir de l'expert qu'est le conducteur automobile est modélisé sous forme de règles floues qualitatives du type "SI [une certaine condition] ALORS [une certaine action]" où la partie "condition" décrit un état de la situation de conduite à un instant donné (combinaison d'éléments caractérisant cette situation de conduite) et la partie "action" décrit le comportement mis en oeuvre par le conducteur au regard de la situation spécifiée. Ce formalisme, faisant appel à des variables floues Pᵥ, Vₗ, Aₗ, R_{c}, et C dans le cas du module 10 et à des descripteurs linguistiques flous, permet de mettre en relation de façon naturelle les actions opérées par le conducteur, soit le couple qu'il applique sur le volant, et les conditions de conduite, soit la position du véhicule dans la voie, sa vitesse latérale, l'angle de lacet et le rayon de courbure de la route. La mise en relation de ces variables floues définit un hyperrectangle, ou parallélotope, de décision d'ordre 4 c'est-à-dire à 4 entrées et 1 sortie. Afin d'en faciliter la représentation et la compréhension, cet hyperrectangle d'ordre 4 est éclaté en trois hyperrectangles de décision d'ordre 3, équivalents au parallélotope d'ordre 4, mettant en relation le couple de consigne et les trois entrées linguistiques Pᵥ, Vₗ, Aₗ, pour une valeur floue constante du rayon de courbure.
Les tableaux 1 à 3, représentés en annexe, sont les trois hyperrectangles de décision d'ordre 3 correspondant aux valeurs floues possibles du rayon de courbure R_{c}, respectivement "ligne droite" (LD), "virage droit" (VD) et "virage gauche" (VG).

La figure 8 est la qualification linguistique du couple volant dans l'exemple du module 10 avec consigne en couple. Elle définit une partition floue à onze classes floues m, dénommées :
- FD : couple fort à droite, défini par le nombre flou triangulaire [c4 ; c5 ; c6] en Newton-mètres ;
- MfD : couple moyen fort à droite, défini par le nombre flou triangulaire [c3 ; c4 ; c5] Nm ;
- MD : couple moyen vers la droite, défini par le nombre flou triangulaire [c2 ; c3 ; c4] Nm ;
- Mfd : couple moyen faible vers la droite, défini par le nombre flou triangulaire [c1 ; c2 ; c3] Nm ;
- fD : couple faible vers la droite, défini par le nombre flou triangulaire [0 ; c1 ; c2] Nm ;
- N : couple nul, défini par le nombre flou triangulaire [- c1 ; 0 ; c1 Nm ;
- fG : couple faible vers la gauche, défini par le nombre flou triangulaire [- c2 ; - c1 ; 0] Nm ;
- MfG : couple moyen faible vers la gauche, défini par le nombre flou triangulaire [- c3 ; - c2 ; - c1] Nm ;
- MG : couple moyen vers la gauche, défini par le nombre flou triangulaire [- c4 ; - c3 ; - c2] Nm ;
- MFG : couple moyen fort vers la gauche, défini par le nombre flou triangulaire [- c5 ; - c4 ; - c3] Nm;
- FG : couple fort à gauche défini par le nombre flou triangulaire [- c6 ; - c5 ; - c4] Nm.

Après fuzzification des variables d'entrée et inférence des règles, les conclusions floues partielles étant agrégées en vue d'obtenir la conclusion floue finale du contrôleur 10 de trajectoire, l'étape de défuzzification permettant au contrôleur de trajectoire de délivrer à l'actionneur la consigne en couple volant.

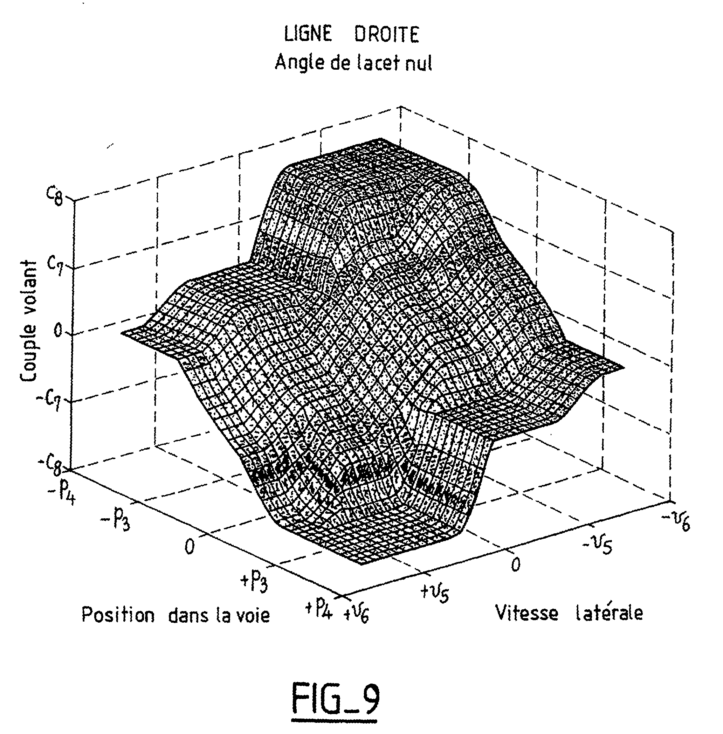

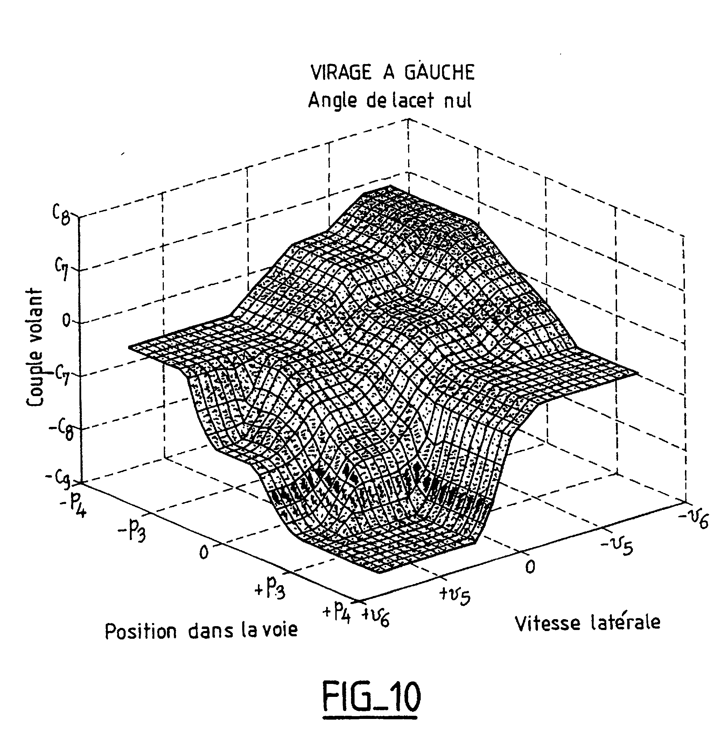

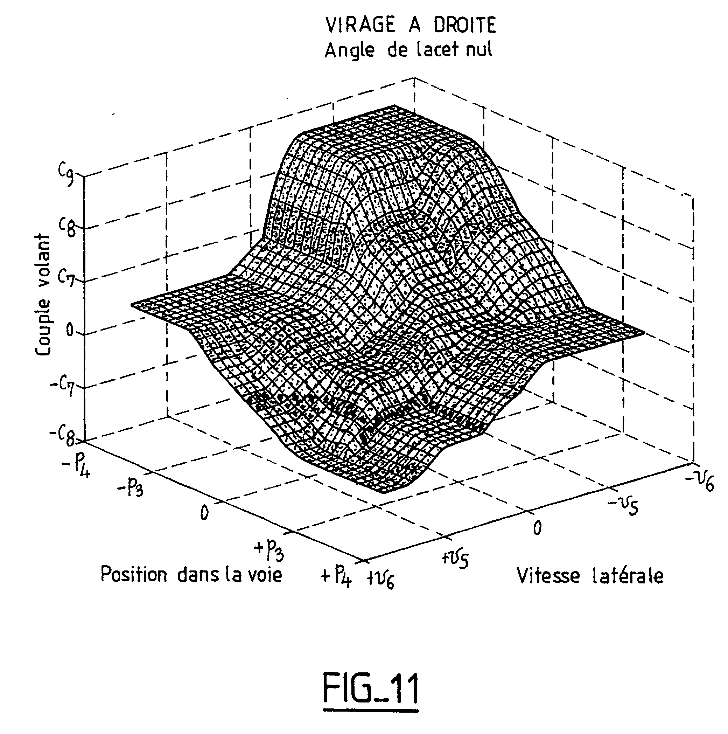

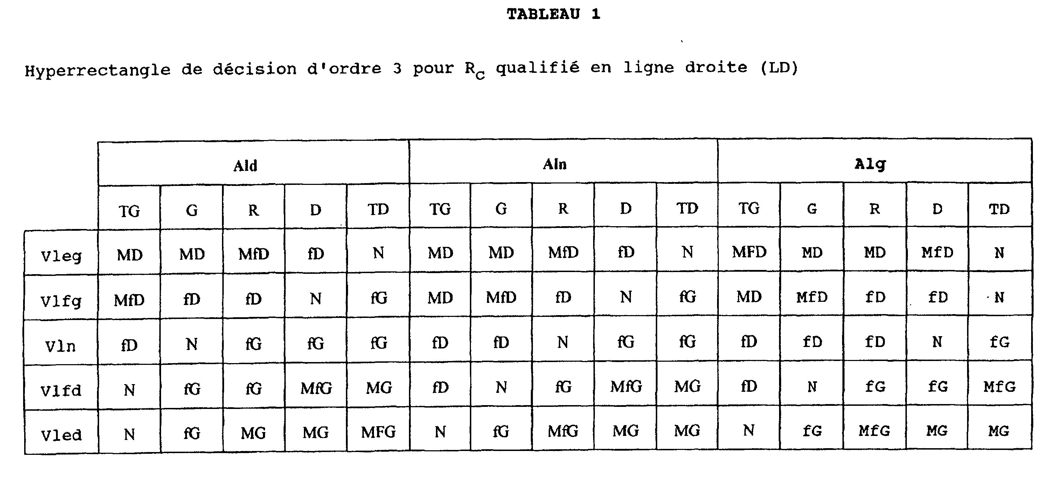

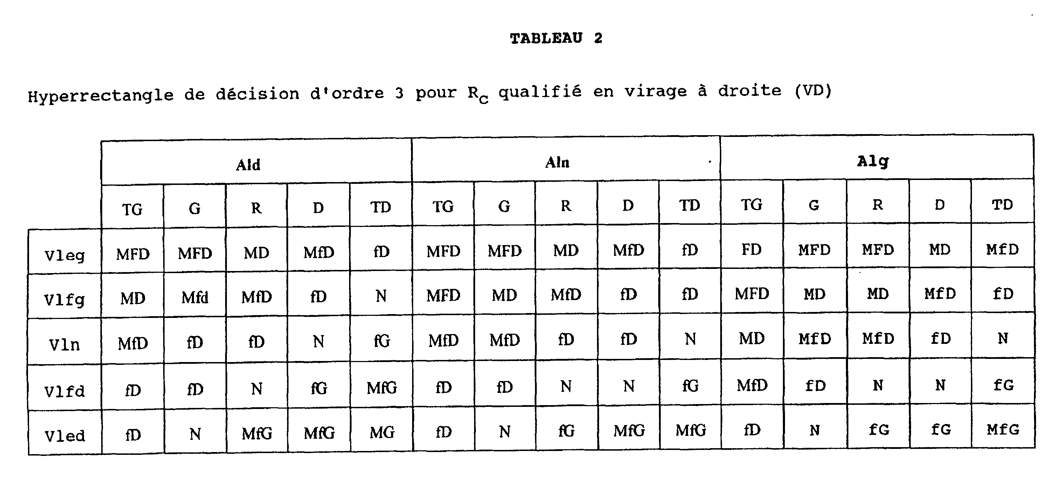

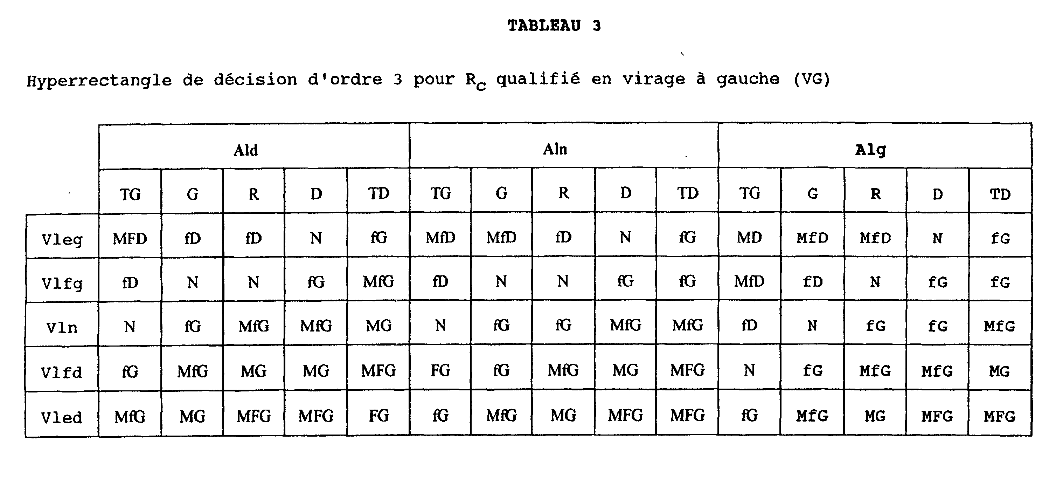

Les figures 9, 10 et 11 sont des nappes de contrôle particulières à une configuration du rayon de courbure R_{c} donnée, respectivement en ligne droite, en virage à gauche et en virage à droite, représentées pour un angle de lacet nul, à une vitesse du véhicule égale à 130 km/h, dans le cas de l'exemple choisi. Elles permettent d'obtenir les valeurs numériques du couple volant pour une situation de conduite donnée.

L'objectif principal du système consiste à améliorer la gestion de la trajectoire du véhicule tout en étant capable de contrer les perturbations extérieures dues au vent ou à la topologie de la route par exemple. Le système de commande prend en charge la conduite automatique en transversal dans certaines conditions et toujours en concordance avec le conducteur, en assurant un suivi de trajectoire par rapport à un rail virtuel non matérialisé au sol. Selon un exemple de réalisation, le système se repère sur les marquages au sol délimitant les bords de la voie de circulation, en particulier une voie rapide ou une autoroute.

La trajectoire suivie est stable, non oscillante et, dès que le conducteur lâche le volant, le système s'enclenche automatiquement pour assurer un suivi de trajectoire par rapport à un rail virtuel sélectionné par le conducteur et tenant compte de la géométrie de la route, notamment de son rayon de courbure.

Selon une variante de réalisation, ce guidage transversal n'est plus assuré par rapport aux marquages au'sol, mais par des techniques d'analyse de texture d'image, voire de balises électroniques ou des aimants placés sur la chaussée fiabilisant la détection de la voie de circulation même en l'absence de marquage, et/ou en utilisant les technologies disponibles avec fusion de données.

## Revendications

1. Système de commande de la direction d'un véhicule automobile constitué d'un dispositif de localisation délivrant des données relatives à l'environnement, d'un calculateur électronique embarqué délivrant une consigne destinée à des actionneurs en vue d'atteindre le positionnement optimal du véhicule dans une voie de circulation, et recevant par ailleurs des données sur le fonctionnement du véhicule et des données relatives au conducteur, **caractérisé en ce que** le calculateur comporte quatre modules électroniques et un superviseur tels que:
- un premier module (8) de diagnostic du style de conduite et des actions volontaires du conducteur, portant sur leur existence et sur leur type, et recevant en entrée des données (Dᵥ) sur le fonctionnement du véhicule, des données (D_{c}) sur le conducteur et la consigne issue du superviseur;
- un second module (9) de modélisation du comportement d'un conducteur, délivrant une trajectoire de référence du véhicule, en fonction des données (Dₑ) relatives à l'environnement, des données (Dᵥ) relatives au fonctionnement du véhicule, des données (D_{c}) relatives au conducteur et des données (D_{d}) issues du module (8) de diagnostic du style de conduite et des actions du conducteur ;
- un troisième module (10) de contrôle de la trajectoire du véhicule qu'il asservit sur une trajectoire de référence dans la voie et lors d'un changement de voie, défini par le module (9) de modélisation du comportement d'un conducteur, en fonction des données (Dₑ) relatives à l'environnement, des données (Dᵥ) relatives au véhicule et des données (D_{c}) relatives au conducteur ;
- un quatrième module (11) de diagnostic de l'environnement de l'ensemble constitué par le véhicule et son conducteur, délivrant des informations sur la présence d'obstacles statiques ou mobiles devant le véhicule, dans sa voie de circulation, et des informations sur la présence et les caractéristiques de roulage de véhicules dans les voies adjacentes, en fonction de signaux provenant de moyens (14) de détection et de mesure d'obstacles, d'images vidéo et de messages hertziens ;
- un module de supervision flou (12), recevant et assurant l'échange des informations nécessaires aux différents modules, analysant le risque et garantissant la sûreté et la cohérence globale de la stratégie qu'il choisit.

2. Système de commande de la direction d'un véhicule automobile selon la revendication 1, **caractérisé en ce que** le module (10) est auto-adaptatif d'une part à l'environnement par l'intermédiaire du module (9) de modélisation du comportement du conducteur qui choisit une trajectoire de référence en fonction des données (Dₑ) relatives à l'environnement et d'autre part au conducteur lui-même par la prise en compte de ses actions par l'intermédiaire du module (8) de diagnostic du style de conduite et des actions volontaires du conducteur.

3. Système de commande de la direction d'un véhicule automobile selon la revendication 1, **caractérisé en ce que** le dispositif de localisation délivrant des données (Dₑ) relatives à l'environnement est constitué par un dispositif de vision (2) qui filme la route, tel une caméra, associé à un dispositif (3) de traitement de l'image filmée.

4. Système de commande de la direction d'un véhicule automobile selon la revendication 1, **caractérisé en ce que** le dispositif de localisation délivrant des données (Dₑ) relatives à l'environnement est constitué par des magnétomètres qui captent un champ magnétique issu de sources magnétiques parfaitement localisées dans la chaussée.

5. Système de commande de la direction d'un véhicule automobile selon la revendication 1, **caractérisé en ce que** le dispositif de localisation délivrant des données (Dₑ) relatives à l'environnement est constitué par un dispositif de repérage de type GPS associé à une cartographie numérique.

6. Système de commande de la direction d'un véhicule automobile selon les revendications 3, 4 et 5, **caractérisé en ce que** le dispositif de localisation délivrant des données (Dₑ) relatives à l'environnement est constitué par une combinaison des trois technologies précédentes avec fusion de données.

7. Système de commande de la direction d'un véhicule automobile selon la revendication 1, **caractérisé en ce que** :
a) les données (Dₑ) relatives à l'environnement sont :
- la position du véhicule dans la voie de circulation, le rayon de courbure instantané et anticipé de ladite voie, la longueur de développement des virages, la distance qui sépare le véhicule du début du prochain virage ou une information symbolique permettant de qualifier le virage, l'angle de lacet relatif par rapport à la voie, la présence, la nature et la vitesse relative d'obstacles mobiles et/ou statiques dans la voie ou les voies adjacentes;
b) les données (Dᵥ) relatives au véhicule sont :
- la vitesse et l'accélération longitudinales et transversales, la vitesse de lacet ;
c) les données (D_{c}) relatives au conducteur sont :
- le couple appliqué sur le volant, l'angle du volant, la vitesse de rotation du volant, l'état de fonctionnement des clignotants, l'effort appliqué sur la pédale de frein, l'angle d'ouverture du papillon.

8. Système de commande de la direction d'un véhicule automobile selon la revendication 1, **caractérisé en ce que** le module (10) de contrôle de la trajectoire du véhicule est réalisé à partir d'un contrôleur flou, dont les quatre variables floues d'entrée sont le rayon de courbure (R_{c}) de la voie sur laquelle circule le véhicule, la vitesse latérale (Vₗ) du véhicule, la position (Pᵥ) du véhicule dans ladite voie et l'angle de lacet (Aₗ) que fait l'axe du véhicule avec l'axe de la route, ces variables floues étant d'une part traitées par un fuzzifieur (13) qui calcule le degré d'appartenance de chaque variable à chacune des classes floues caractéristiques respectivement de la forme de la voie de circulation, de l'amplitude de la vitesse latérale du véhicule, de la grandeur de l'angle de lacet et de la position du véhicule par rapport au milieu de la voie, et d'autre part, après fuzzification des variables d'entrée et inférence des règles, les conclusions floues partielles étant agrégées en vue d'obtenir la conclusion floue finale du contrôleur (10) de trajectoire, l'étape de défuzzification permettant au contrôleur de trajectoire de délivrer à l'actionneur la consigne en couple volant.

9. Système de commande de la direction d'un véhicule automobile selon la revendication 8, **caractérisé en ce que**, dans le module (10) de contrôle de la trajectoire du véhicule,
- la variable d'entrée constituée par le rayon de courbure (R_{c}) de la voie de circulation du véhicule est **caractérisée par** son appartenance à trois classes floues représentatives de la forme de la voie, qualifiées de : LIGNE DROITE (LD), VIRAGE A GAUCHE (VG) et VIRAGE A DROITE (VD) ;
- la variable d'entrée constituée par la vitesse latérale (Vₗ) du véhicule est **caractérisé par** cinq classes floues qualifiées de :
. V_{leg} : vitesse latérale élevée vers la gauche,
. V_{lfg} : vitesse latérale faible vers la gauche,
. Vₗₘ : vitesse latérale nulle vers la gauche,
. V_{lfd} : vitesse latérale faible vers la droite,
. V_{led} : vitesse latérale élevée vers la droite ;
- la variable d'entrée constituée par la position (Pᵥ) du véhicule par rapport à l'axe de la voie est **caractérisée par** son appartenance à cinq classes floues qualifiées de :
. TG : très à gauche du milieu de la voie,
. G : à gauche du milieu de la voie,
. R : le long du rail, au milieu de la voie,
. D : à droite du milieu de la voie,
. TD : très à droite du milieu de la voie ;
- la variable d'entrée constituée par l'angle de lacet (Aₗ) du véhicule est **caractérisé par** son appartenance à trois classes floues qualifiées de :
. A_{leg} : angle de lacet dirigé vers la gauche ;
. Aₗₙ : angle de lacet nul ;
. A_{ld} : angle de lacet dirigé vers la droite.

10. Système de commande de la direction d'un véhicule automobile selon la revendication 9, **caractérisé en ce que** le couple volant est **caractérisé par** son appartenance à onze classes floues, qualifiées de :
- FD : couple fort à droite ;
- MFD : couple moyen à droite ;
- MD : couple moyen vers la droite ;
- MfD : couple moyen faible vers la droite ;
- fD : couple faible vers la droite ;
- N : couple nul ;
- fG : couple faible vers la gauche ;
- MfG : couple moyen faible vers la gauche ;
- MG : couple moyen vers la gauche ;
- MFG : couple moyen fort vers la gauche ;
- FG : couple fort à gauche.

11. Système de commande de la direction d'un véhicule automobile selon la revendication 1, **caractérisé en ce que** le dispositif positionnant le véhicule de manière optimale dans sa voie reçoit du calculateur électronique embarqué (4) une consigne de couple à appliquer au volant (1) du véhicule et est réalisé par un moteur électrique (5), coaxial à la colonne de direction (6) reliant le volant aux roues (7) et ayant une consigne de couple volant ou d'angle volant.

12. Système de commande de la direction d'un véhicule automobile selon la revendication 1, **caractérisé en ce que** le dispositif positionnant le véhicule de manière optimale dans sa voie reçoit du calculateur électronique embarqué (4) une consigne de couple à appliquer au volant (1) du véhicule et est réalisé par un moteur électrique utilisé pour une direction assistée électrique auquel on superposerait la consigne de couple de la direction intelligente à la consigne initiale émanant des données du véhicule et du conducteur.

13. Système de commande de la direction d'un véhicule automobile selon la revendication 1, **caractérisé en ce que** le dispositif positionnant le véhicule de manière optimale dans sa voie reçoit du calculateur électronique embarqué (4) une consigne de déplacement du boîtier de crémaillère du véhicule et est réalisé par un vérin piloté par un groupe électropompe qui déplacerait le boîtier de crémaillère de la direction.

14. Système de commande de la direction d'un véhicule automobile selon la revendication 1, **caractérisé en ce que** le dispositif positionnant le véhicule de manière optimale dans sa voie est un dispositif de pilotage de la force de freinage indépendante sur chaque roue pour générer un moment de lacet.

## Patentansprüche

1. System zur Richtungssteuerung eines Kraftfahrzeuges, bestehend aus einer Ortungsvorrichtung, deren Ausgangsdaten sich auf die Umgebung beziehen, einem mitgeführten elektronischen Rechner, der einen Sollwert erstellt für Betätigungsteile im Hinblick auf eine optimale Positionierung des Fahrzeugs auf einer Verkehrsfahrbahn und dem Daten zugeführt werden betreffend den Betrieb des Fahrzeugs sowie Daten betreffend den Fahrer, **dadurch gekennzeichnet, dass** der Rechner vier elektronische Module und ein Überwachungsmodul aufweist:
- ein erstes Modul (8) zur Diagnose des Fahrstils und der vorsätzlichen Aktionen des Fahrers, das sowohl deren Auftreten als auch die Art erfasst, und dessen Eingang Daten (Dᵥ) bezüglich des Betriebes des Fahrzeuges, Daten (D_{c}) bezüglich des Fahrers und der vom Überwachungsmodul stammende Sollwert zugeführt werden;
- ein zweites Modul (9) zur Modellisierung des Verhaltens eines Fahrers, das eine Bezugsfahrbahn für das Fahrzeug erstellt als Funktion von Daten (Dₑ) bezüglich der Umgebung, der Daten (Dᵥ) bezüglich des Betriebes des Fahrzeuges, der Daten (D_{c}) bezüglich des Fahrers und von Daten (D_{d}) die vom Modul (8) für die Diagnose des Fahrstils und der Aktionen des Fahrers stammen;
- ein drittes Modul (10) für die Kontrolle des Fahrweges des Fahrzeuges, das dieses auf einem Bezugsfahrweg auf der Fahrbahn hält sowie während der Änderung der Fahrrichtung, definiert durch das Modul (9) für die Modellisierung des Verhaltens eines Fahrers als Funktion der Daten (Dₑ) bezüglich der Umgebung, der Daten (Dᵥ) bezüglich des Fahrzeuges und der Daten (D_{c}) bezüglich des Fahrers;
- ein viertes Modul (11) für die Diagnose der Umgebung der gesamten Anordnung, bestehend aus dem Fahrzeug und seinem Fahrer, das Informationen erstellt bezüglich des Auftretens von statischen oder beweglichen Hindernissen vor dem Fahrzeug auf der Fahrbahn sowie Informationen bezüglich der Anwesenheit und der Merkmale des Verhaltens anderer Fahrzeuge auf benachbarten Fahrbahnen als Funktion von Signalen, die von Anordnungen (14) zur Feststellung und zur Messung von Hindernissen, von Videobildern und von Frequenzmessungen stammen;
- ein Unschärfe-Überwachungsmodul (12), dem die von den einzelnen Modulen abgegebenen Informationen zugeführt werden und das die für die einzelnen Module erforderlichen Informationen diesen übermittelt und das das Risiko analysiert und die Sicherheit sowie die gesamte Übereinstimmung der gewählten Strategie gewährleistet.

2. System zur Richtungssteuerung eines Kraftfahrzeuges nach Anspruch 1, **dadurch gekennzeichnet, dass** das Modul (10) selbstanpassend ist einerseits an die Umgebung mittels des Moduls (9) für die Modellisierung des Verhaltens des Fahrers, das einen Bezugsfahrweg wählt als Funktion der Daten (Dₑ) bezüglich der Umgebung und andererseits an den Fahrer selbst durch Berücksichtigung seiner Aktionen mittels des Moduls (8) für die Diagnose des Fahrstils und der vorsätzlichen Aktionen des Fahrers.

3. System zur Richtungssteuerung eines Kraftfahrzeuges nach Anspruch 1, **dadurch gekennzeichnet, dass** die Ortungsvorrichtung, die die Daten (Dₑ) bezüglich der Umgebung liefert, aus einer optischen Erkennungsvorrichtung (2) besteht, die die Strasse filmt, wie zum Beispiel eine Kamera, die einer Vorrichtung zur Verarbeitung der gefilmten Bilder zugeordnet ist.

4. System zur Richtungssteuerung eines Kraftfahrzeuges nach Anspruch 1, **dadurch gekennzeichnet, dass** die Ortungsvorrichtung, die die Daten (Dₑ) bezüglich der Umgebung liefert, aus Magnetometern besteht, die ein Magnetfeld erfassen, das von magnetischen Quellen stammt, die in perfekter Weise in den Strassenbelag eingelassen sind.

5. System zur Richtungssteuerung eines Kraftfahrzeuges nach Anspruch 1, **dadurch gekennzeichnet, dass** die Ortungsvorrichtung, die die Daten (Dₑ) bezüglich der Umgebung liefert, aus einem GPS-Ortungsgerät besteht, dem eine numerische Kartographie zugeordnet ist.

6. System zur Richtungssteuerung eines Kraftfahrzeuges nach Ansprüchen 3, 4 und 5, **dadurch gekennzeichnet, dass** die Ortungsvorrichtung, die die Daten (Dₑ) bezüglich der Umgebung liefert, aus einer Kombination der drei vorstehenden Technologien mit Zusammenführung der Daten besteht.

7. System zur Richtungssteuerung eines Kraftfahrzeuges nach Anspruch 1, **dadurch gekennzeichnet, dass** :
a) die Daten (Dₑ) bezüglich der Umgebung die folgenden sind:
- die Position des Fahrzeuges auf der Verkehrsfahrbahn, der momentane und der voraussichtliche Krümmungsradius der Fahrbahn, die Kurvenlänge, der Abstand, der das Fahrzeug vom Beginn der nächsten Kurve trennt oder eine symbolische Information, die eine Qualifizierung der Kurve erlaubt, der Seitenwinkel bezüglich der Fahrbahn, das Vorhandensein, die Art und die Relativgeschwindigkeit beweglicher und/oder statischer Hindernisse auf der Fahrbahn oder auf benachbarten Fahrbahnen;
b) die Daten (Dᵥ) bezüglich des Fahrzeuges die folgenden sind:
- die Geschwindigkeit und die Beschleunigung in Längsrichtung und in Querrichtung sowie die Seitengeschwindigkeit;
c) die Daten (D_{c}) bezüglich des Fahrers die folgenden sind:
- das das Lenkrad beaufschlagende Moment, der Verdrehwinkel des Lenkrades, die Drehgeschwindigkeit des Lenkrades, der Betriebszustand der Blinker, die Kraft, mit der das Bremspedal beaufschlagt wird und der Öffnungswinkel der Drosselklappe.

8. System zur Richtungssteuerung eines Kraftfahrzeuges nach Anspruch 1, **dadurch gekennzeichnet, dass** das Modul (10) zur Kontrolle des Fahrweges des Fahrzeuges aus einer Unschärfekontrollanordnung besteht, dessen vier dem Eingang zugeführte Unschärfevariable der Krümmungsradius (R_{c}) der Fahrbahn, der es folgt, die Seitengeschwindigkeit (Vₗ) des Fahrzeuges, die Position (Pᵥ) der Fahrzeuges auf der Fahrbahn und der Seitenwinkel (Aₗ) ist, den die Achse des Fahrzeuges mit der Achse der Strasse einschliesst, , wobei diese Unschärfevariablen einerseits in einer Fuzzy-Logik (13) verarbeitet werden, die den Grad der Zugehörigkeit berechnet einer jeden Variablen zu jeder der charakteristischen Unschärfeklassen, wie der Form der Verkehrsfahrbahn, bzw. derAmplitude der Seitengeschwindigkeit des Fahrzeuges, bzw. der Wert des Seitenwinkels, bzw. der Position des Fahrzeuges bezüglich der Mitte der Fahrbahn und andererseits nach Verarbeitung in der Fuzzy-Logik der Eingangsvariablen und Aufstellung der Regeln partielle Unschärfeschlussfolgerungen erstellt werden im Hinblich auf die endgültige Unschärfe-Schlussfolgerung der Kontrollanordnung (1) für den Fahrweg, wobei ein Schritt einer weiteren Verarbeitung in der Fuzzy-Logik es der Kontrollanordnung für den Fahrweg ermöglicht, dem Betätigungsteil einen Sollwert für das Lenkradmoment zu übermitteln.

9. System zur Richtungssteuerung eines Kraftfahrzeuges nach Anspruch 8, **dadurch gekennzeichnet, dass** im Modul (10) für die Kontrolle des Fahrweges des Fahrzeuges,
- die Eingangsvariable, die aus dem Krümmungsradius (R_{c}) der Verkehrsfahrbahn für das Fahrzeug besteht, **gekennzeichnet ist durch** ihre Zugehörigkeit zu drei Unschärfeklassen für die Gestalt der Fahrbahn, eingeteilt in: GERADE LINIE (LD), LINKSKURVE (VG) und RECHTSKURVE (VD) ;
- die Eingangsvariable, die aus der Seitengeschwindigkeit (Vₗ) besteht, **gekennzeichnet ist durch** fünf Unschärfeklassen, nämlich:
• V_{leg} : erhöhte Seitengeschwindigkeit nach links,
• V_{lfg} : geringe Seitengeschwindigkeit nach links,
• Vₗₘ : Seitengeschwindigkeit Null nach links,
• V_{lfd} : geringe Seitengeschwindigkeit nach rechts,
• V_{led} : erhöhte Seitengeschwindigkeit nach rechts ;
- die Eingangsvariable, die aus der Position (Pᵥ) des Fahrzeuges bezüglich der Achse der Fahrbahn besteht, **gekennzeichnet ist durch** ihre Zugehörigkeit zu fünf Unschärfeklassen, nämlich:
• TG : ganz links von der Mitte der Fahrbahn,
• G : links von der Mitte der Fahrbahn,
• R : entlang der Fahrschiene auf der Mitte der Fahrbahn,
• D : rechts von der Mitte der Fahrbahn,
• TD : ganz rechts von der Mitte der Fahrbahn ;
- die Eingangsvariable, die aus dem Seitenwinkel (Aₗ) des Fahrzeuges besteht, **gekennzeichnet ist durch** ihre Zugehörigkeit zu drei Unschärfeklassen, nämlich :
• A_{leg} : nach links gerichteter Seitenwinkel,
• Aₗₙ : Seitenwinkel Null
• A_{ld} : nach rechts gerichteter Seitenwinkel.

10. System zur Richtungsteuerung eines Kraftfahrzeuges nach Anspruch 9, **dadurch gekennzeichnet, dass** das Lenkradmoment **gekennzeichnet ist durch** seine Zugehörigkeit zu elf Unschärfeklassen, nämlich:
- FD : grosses Moment rechts ;
- MFD : mittleres Moment rechts ;
- MD : mittleres Moment nach rechts ;
- MfD : kleines mittleres Moment nach rechts ;
- fD : kleines moment nach rechts
- N : Moment Null ;
- fG : kleines Moment nach links ;
- MfG : kleines mittleres Moment nach links ;
- MG : mittleres Moment nach links ;
- MFG: grosses mittleres Moment nach links ;
- FG : grosses Moment nach links.

11. System zur Richtungssteuerung eines Kraftfahrzeuges nach Anspruch 1, **dadurch gekennzeichnet, dass** die Vorrichtung zur optimalen Positionierung des Fahrzeuges auf seiner Fahrbahn vom mitgeführten elektronischen Rechner (4) einen Sollwert erhält, mit dem das Lenkrad (1) des Fahrzeuges zu beaufschlagen ist und dass sie aus einem Elektromotor (5) besteht, der koaxial zur Lenksäule (6) angeordnet ist, die das Lenkrad mit den Rädern (7) verbindet und der auf einen Sollwert für das Moment des Lenkrades oder einen Verdrehinkel für das Lenkrad anspricht.

12. System zur Richtungssteuerung eines Kraftfahrzeuges nach Anspruch 1, **dadurch gekennzeichnet, dass** die Vorrichtung zur optimalen Positionierung des Fahrzeuges auf seiner Fahrbahn vom mitgeführten elektronischen Rechner (4) einen Sollwert erhält, mit dem das Lenkrad (1) des Fahrzeuges zu beaufschlagen ist und dass sie aus einem Elektromotor besteht, der für eine elektrische Servolenkung verwendet wird und dessen Ursprungssollwert, der von den Daten für das Fahrzeug und für den Fahrer abgeleitet ist, ein Sollwert für das moment der intelligenten Richtungssteuerung überlagert wird.

13. System zur Richtungssteuerung eines Kraftfahrzeuges nach Anspruch 1, **dadurch gekennzeichnet, dass** die Vorrichtung zur optimalen Positionierung des Fahrzeuges auf seiner Fahrbahn vom mitgeführten elektronischen Rechner (4) einen Sollwert erhält für die Verschiebung des Gehäuses der Zahnstangenlenkung des Fahrzeuges und dass sie aus einem Druckzylinder besteht, der von einer Gruppe von Elektropumpen angesteuert wird und der das Gehäuse für die Zahnstangenlenkung verschiebt.

14. System zur Richtungssteuerung eines Kraftfahrzeuges nach Anspruch 1, **dadurch gekennzeichnet, dass** die Vorrichtung zur optimalen Positionierung des Fahrzeuges auf seiner Fahrbahn eine Vorrichtung ist zur unabhängigen Ansteuerung der Bremskraft für jedes Rad um ein Seitenmoment zu erzeugen.

## Claims

1. System for controlling the direction of an automotive vehicle constituted by a locating device delivering data relative to the environment, an on-board electronic computer delivering a reference input intended for actuators with the aim of obtaining optimum positioning of the vehicle in a traffic lane, and also receiving data about the functioning of the vehicle and data relative to the driver, **characterised in that** the computer comprises four electronic modules and a supervisor such that:
- a first module (8) diagnostic of the style of driving and the voluntary actions of the driver, focusing upon the occurrence thereof and the type thereof, and receiving at its input data (Dᵥ) about the functioning of the vehicle, data (D_{c}) about driver, and the reference input from the supervisor;
- a second module (9) for modelling the behaviour of a driver, delivering a reference trajectory of the vehicle as a function of the data (Dₑ) relative to the environment, data (Dᵥ) relative to the functioning of the vehicle, data (D_{c}) relative to the driver, and data (D_{d}) from the driving style and driver action diagnostic module (8);
- a third module (10) for control of the trajectory of the vehicle that it automatically controls on a reference trajectory in the lane, and when there is a lane change, defined by the module (9) for modelling driver behaviour, as a function of the data (Dₑ) relative to the environment, data (Dᵥ) relative to the vehicle, and data (D_{c}) relative to the driver;
- a fourth module (11) diagnostic of the environment of the assembly constituted by the vehicle and its driver, delivering information about the presence of static or moveable obstacles in front of the vehicle, in its traffic lane, and information about the presence and the characteristics of travel of vehicles in the adjacent lanes, as a function of signals originating from means (14) for detection and measurement of obstacles, video images, and Hertzian messages;
- a fuzzy supervision module (12) receiving and providing the exchange of information necessary for the different modules, analysing risk and guaranteeing the safety and overall coherence of the strategy that it selects.

2. System for control of the direction of an automotive vehicle according to claim 1, **characterised in that** the module (10) is self-adapting on the one hand to the environment via the module (9) for modelling driver behaviour that selects a reference trajectory as a function of data (Dₑ) relative to the environment, and on the other hand to the conductor himself, by taking into account his actions via the driving style and driver voluntary action diagnostic module (8).

3. System for control of the direction of an automotive vehicle according to claim 1, **characterised in that** the locating device delivering data (Dₑ) relative to the environment is constituted by a viewing device (2) that films the road, such as a camera, connected to a device (3) for processing the filmed image.

4. System for control of the direction of an automotive vehicle according to claim 1, **characterised in that** the locating device delivering data (Dₑ) relative to the environment is constituted by magnetometers that sense a magnetic field emitted from magnetic sources located perfectly in the roadway.

5. System for control of the direction of an automotive vehicle according to claim 1, **characterised in that** the locating device delivering data (Dₑ) relative to the environment is constituted by a position-finding device of the GPS type connected to a digital map system.

6. System for control of the direction of an automotive vehicle according to claims 3, 4 and 5, **characterised in that** the location device delivering data (Dₑ) relative to the environment is constituted by a combination of the three preceding technologies with amalgamation of data.

7. System for control of the direction of an automotive vehicle according to claim 1, **characterised in that**:
a) the data (Dₑ) relative to the environment are:
- the position of the vehicle in the traffic lane, the current and anticipated radius of curvature of said lane, the length of development of bends, the distance separating the vehicle from the start of the next bend, or symbol information allowing the bend to be judged, the relative turning angle with respect to the lane, the presence nature and relative speed of moveable and/or static obstacles in the lane or the adjacent lanes;
b) the data (Dᵥ) relative to the vehicle are:
- the longitudinal and transverse speed and acceleration, the turning speed;
c) the data (D_{c}) relative to the driver are:
- the torque applied to the steering wheel, the angle of the steering wheel, the speed of rotation of the steering wheel, the state of functioning of the indicators, the force applied to the brake pedal, the throttle opening angle.

8. System for control of the direction of an automotive vehicle according to claim 1, **characterised in that** the module (10) for controlling the trajectory of the vehicle is implemented by a fuzzy controller, the four fuzzy input variables of which are the curvature radius (R_{c}) of the lane upon which the vehicle is travelling, the lateral speed (Vₗ) of the vehicle, the position (Pᵥ) of the vehicle in said lane, and the turning angle (Aₗ) of the vehicle axis to the axis of the road, these fuzzy variables being on the one hand processed by a fuzzifier (13) that calculates the degree to which each variable belongs to each of the characteristic fuzzy categories, respectively of the shape of the traffic lane, the amplitude of the lateral speed of the vehicle, the size of the turning angle and the position of the vehicle with respect to the centre of the lane, and on the other hand, after fuzzification, of the input variables and inference of the rules, the partial fuzzy conclusions being aggregated with a view to obtaining the inal fuzzy conclusion of the trajectory controller (10), the de-fuzzification step allows the trajectory controller to deliver the steering wheel torque reference input to the actuator.

9. System for control of the direction of an automotive vehicle according to claim 8, **characterised in that** in the module (10) for controlling the trajectory of the vehicle,
- the input variable constituted by the radius of curvature (R_{c}) of the traffic lane of the vehicle is **characterised by** belonging to three fuzzy categories representative of the shape of the lane, qualified by: STRAIGHT LINE (LD), BEND TO THE LEFT (VG) and BEND TO THE RIGHT (VD);
- the input variable constituted by the lateral speed (Vₗ) of the vehicle is **characterised by** five fuzzy classes, qualified by:
. V_{leg} lateral speed increased to the left,
. V_{lfg} lateral speed low to the left,
. Vₗₘ zero lateral speed to the left,
. V_{lfd} lateral speed low to the right,
. V_{led} lateral speed increased to the right;
- the input variable constituted by the position (Pᵥ) of the vehicle with respect to the axis of the lane is **characterised by** belonging to five fuzzy classes qualified by:
. TG far to the left from the centre of the lane,
. G to the left from the centre of the lane,
. R along the track, in the centre of the lane,
. D to the right from the centre of the lane,
. TD far to the right from the centre of the lane;
- the input variable constituted by the turning angle (Aₗ) of the vehiclc is **characterised by** belonging to three fuzzy classes, qualified by:
. A_{leg} turning angle directed to the right;
. Aₗₘ zero turning angle;
. A_{ld} turning angle directed to the right.

10. System for control of the direction of an automotive vehicle according to claim 9, **characterised in that** the steering wheel torque is **characterised by** belonging to eleven fuzzy classes, qualified by:
- FD strong torque straight ahead;
- MFD medium torque straight ahead;
- MD medium torque to the right;
- MfD medium low torque to the right;
- fD low torque to the right;
- N zero torque;
- fG low torque to the left;
- MfG medium low torque to the left;
- MG medium torque to the left;
- MFG medium strong torque to the left;
- FG strong torque to the left

11. System for control of the direction of an automotive vehicle according to claim 1, **characterised in that** the device positioning the vehicle in the optimum manner in its lane receives from the on board electronic computer (4) a reference torque to be applied to the steering wheel (1) of the vehicle and is implemented by an electric motor (5) coaxial to the steering column (6) connecting the steering wheel to the wheels (7) and having a reference torque for the steering wheel or steering wheel angle.

12. System for control of the direction of an automotive vehicle according to claim 1, **characterised in that** the device positioning the vehicle in the optimum manner in its lane receives from the on board electronic computer (4) a reference torque to be applied to the steering wheel (1) of the vehicle and is implemented by an electric motor used for electrically assisted steering, wherein the reference torque for intelligent steering is superimposed on the initial reference input originating from vehicle and driver data.

13. System for control of the direction of an automotive vehicle according to claim 1, **characterised in that** the device positioning the vehicle in the optimum manner in its lane receives from the on board computer (4) a reference input for displacement of the steering rack of the vehicle, and is implemented by an actuator controlled by an electric pump unit that will displace the steering rack.

14. System for control of the direction of an automotive vehicle according to claim 1, **characterised in that** the device positioning the vehicle in the optimum manner in its lane is a device for controlling the independent braking on each wheel in order to generate a turning moment.
